# EUROPEAN PATENT SPECIFICATION

(11) **EP 0 983 696 B1**
(45) Date of publication and mention of the grant of the patent: **10.11.2004**
(21) Application number: 98925678.9
(22) Date of filing: 15.06.1998
(51) Int. Cl.: H04Q 7/22, H04M 15/00

(54) **CHARGING METHOD IN A MOBILE TELECOMMUNICATION SYSTEM**
TARIFIERUNGSVERFAHREN IN EINEM MOBILEN TELEKOMMUNIKATIONSSYSEM
PROCEDE DE FACTURATION DANS UN SYSTEME DE TELECOMMUNICATION MOBILE

(30) Priority: 17.06.1997 FI 972591
(43) Date of publication of application: 08.03.2000
(73) Proprietor: TeliaSonera Finland Oyj, 00510 Helsinki (FI)
(72) Inventor: LINKOLA, Janne, FIN-00170 Helsinki (FI)
(74) Representative: Simmelvuo, Markku Kalevi
(86) International application number: PCT/FI1998/000515
(87) International publication number: WO 1998/058505

(56) References cited:
- EP-A- 0 568 824
- EP-A- 0 734 144
- WO-A-94/28670
- WO-A-96/20570
- WO-A-96/20571
- WO-A-96/34499
- WO-A-97/08884
- WO-A-97/11569
- US-A- 5 546 445

## Description

### SCOPE OF THE INVENTION

The present invention relates to the formation of the principles of calculation of call price in a cellular mobile communication system.

### TECHNOLOGICAL BACKGROUND

In a wired network, the charge for a call depends on whether the call is a local call, a trunk call or an international call, in other words, a geographically defined call, or whether it is a call to a service number. Thus, when dialling the number of a called subscriber, the calling subscriber already knows the principles on which the price of the call will be calculated.

The principles used in a wired network for calculating the call price cannot be directly applied in mobile telephone networks. This is because the mobile subscriber is not tied to a given locality while the called subscriber may be a locality-dependent wired network subscriber or a mobile subscriber in the same mobile communication network or a subscriber in another operator's mobile communication network. Within the mobile communication network, no distinction is made between local calls and long-distance calls regarding pricing; moreover, in distinction from the wired network, even the called subscriber is liable to pay a portion of the price of a received call in certain cases.

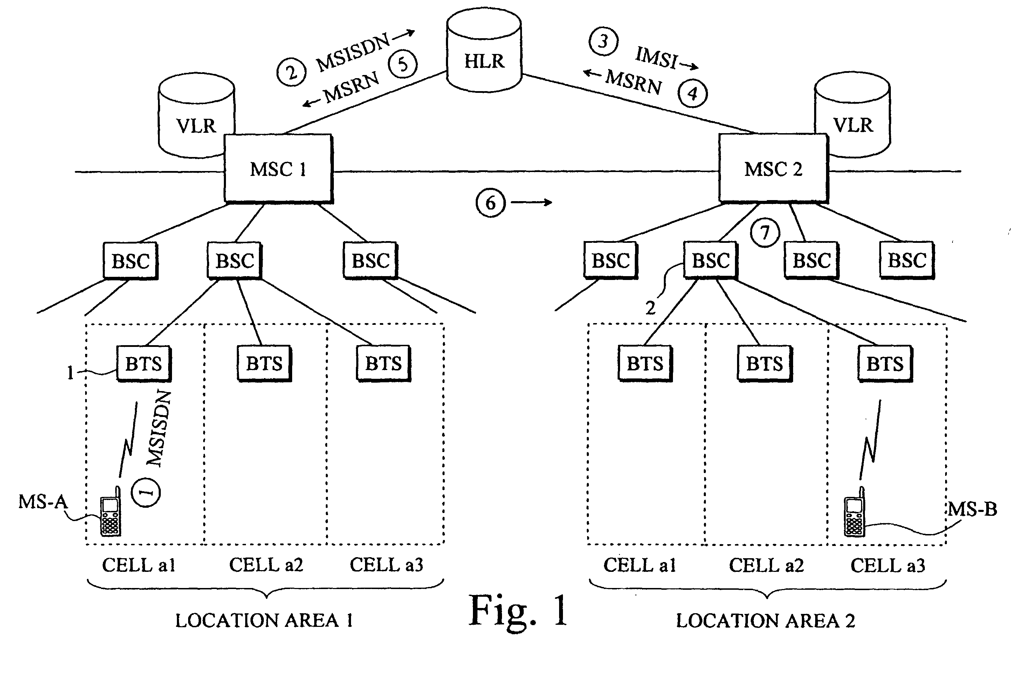

In mobile communication networks, a difficulty in locality-dependent determination of price is that the exact locality of neither the calling nor the called subscriber is known. To give an understanding of the principles of calculation of call price, the call setup process in a mobile communication network will now be described in general outline, referring to Fig. 1.

When a calling subscriber in cell a1 in location area 1 under mobile switching centre MSC1 makes a call to a subscriber in location area 2 under another mobile switching centre MSC2, he/she will dial the MSISDN number (Mobile Subscriber International ISDN number) of the called subscriber on his/her mobile station MS-A, which sends it in a message to the base transceiver station 1, step 1. Upon receiving the message, MSC1 checks whether the request can be accepted. As a part of this check, the subscriber data of the calling subscriber are retrieved from the visitor location register VLR1 associated with MSC1, where they have been stored in conjunction with the location updating procedure. If the request is accepted, the mobile switching centre MSC1 will send to the home location register HLR an enquiry containing the called subscriber's MSISDN number, step 2. Based on this number, the HLR retrieves the data for the called subscriber, which indicate that the called subscriber has roamed to visitor location register VLR2. Next, the HLR sends the IMSI (International Mobile Subscriber Identity) data to visitor location register VLR2, asking the latter to give the roaming number, step 3, whereupon VLR2 sends the roaming number MSRN to the home location register HLR, step 4, from where it is sent further to MSC1, step 5.

After this, the call can be routed from mobile switching centre MSC1 to mobile switching centre MSC2 on the basis of the MSRN number (Mobile Subscriber Roaming Number) received from VLR2, step 6. Upon receiving the start message, the mobile switching centre MSC2 of the called subscriber retrieves the subscriber data for the called subscriber from the associated VLR2. From the subscriber data, MSC2 learns the location area LAI 2 of the called subscriber, so MSC2 is able to send a paging message via the appropriate base station controller 2 (step 7) to the cells b1, b2, b3 in the location area in question. After the called subscriber's mobile station MS-B has responded to the paging, the call is finally set up to the called subscriber. From what was said above, it is obvious that it is only after the called subscriber's mobile station has responded to the paging message that the relevant mobile switching centre MSC2 is informed of the called subscriber's location at the cell level.

The mobile switching centre may also be linked to a service switching point SSP of an intelligent network IN to allow connections from the mobile communication network to the intelligent network. Via an intelligent network, a wide variety of services can be offered to the subscribers of the mobile communication network, including services like follow-mediversion of calls, call rerouting distribution, premium rate calls, etc.

In a state-of-the-art mobile communication network, the main rule regarding call charging is that the calling subscriber is charged for the connection between him/her and the home network of the called subscriber while the called subscriber is charged for the connection between his/her current locality and his/her home network.

To increase flexibility regarding the billing principles, a known method is to set a special billing parameter that allows calls made from the subscriber number associated with the parameter to be billed at a rate lower than normal at times when the load on the mobile communication network is low and, correspondingly, at a higher rate when the load on the mobile communication network is high. This parameter creates a time-dependent call charging principle, but in other respects the pricing of calls follows the above-mentioned principles. Another known practice is to charge a lower price for calls between a mobile station and a specified wired network telephone than for normal calls. This can be implemented by assigning for all subscribers to the service a common service number, e.g. 020100, as the called subscriber number, which directs the call to an intelligent network. In the intelligent network, a service program searches a database to find the called subscriber number associated with the calling subscriber number, and the call is routed to this number.

A comparison of the principles of call price calculation used in mobile communication networks with those used in wired networks reveals certain problems. Since all cells are equal with respect to the mobile communication network, it is difficult to offer the various user groups any other principles of call price calculation than e.g. the aforesaid price variation based on the time of the day. At present, there are no special call price calculation principles applicable to calls within the same cell or calls between certain cells. However, it would be attractive for a mobile telephone network operator to be able to provide various services dependent on the locality where the call is started and/or where it is terminated. Such services include e.g. locality-dependent pricing solutions.

Specifications WO-96/20570 and WO/96/20571 present solutions for determining the principles of call price calculation. The price calculation principles can be improved by setting a given cell or a number of cells of a mobile telephone network as a special cell group. During call setup, the mobile switching centre or a service control point SCP in an intelligent network analyses the call to determine whether the cell in whose area the calling subscriber is located and/or the cell in whose area the called subscriber is located belong(s) to the group of special cells. When the calling and called subscribers are located in cells belonging to different switching centres, data regarding the cell of the called subscriber is transmitted to the switching centre of the calling subscriber or to an intelligent network before a voice connection is established. Thus, based on whether the subscribers are in a group of special cells or not, it is possible to vary the call charging rates applied.

Specification WO-96/34499 describes a system in which the subscribers are divided into normal subscribers and "fixed" subscribers. A normal subscriber may start a call in any cell, whereas a fixed subscriber has limited access to the network from a subscriber area comprising one or more cells. When a fixed subscriber is at the boundary of his/her area, the call is forcibly directed to the base transceiver station of the subscriber area if possible.

These solutions allow the application of more fine-grained call charging principles than those generally used. A feature common to these solutions is that the right to a differently priced call is determined according to the cell in whose area the subscriber is physically located at the time of the call, i.e. according to the base transceiver station that connects the subscriber to the network. This is because the metering record generated at the start of the call includes, among other data, an identifier of the base transceiver station via which the connection is set up, and the base station identifier again reveals whether the base station belongs to a group of special cells. In other words, the base station identifier functions as a factor that ultimately determines the price of the call.

However, there is a problem associated with these prior-art solutions. In most mobile telephone systems, it is the network that makes the decision as to which base station is to be used to transmit the subscriber's calls. When the subscriber is in the fringe area of a cell where a lower call charge is applicable, the network may repeatedly command the mobile station to perform a handover between two base stations, which means that the calling end of the connection alternates between the base station of a "cheaper" cell and the base station of an adjacent cell. It the adjacent cell is not one of the cells where a lower call charge is applicable, then the result would be that the call price would vary during the same call as the connection is handed over from one base station to another, the call charge being thus lower at one moment and higher at the next, without the subscriber having any chance to influence the situation in any way.

One solution proposed to cope with this problem is to give the mobile station some of the handover control functions between base stations. In the idle state, the mobile station would remain as long as possible in signalling contact with a cell applying a lower call charge when in the fringe area of the cell, in other words, the mobile station would remain "hanging" in the cell even when a neighbouring cell would provide a better connection quality. During a communication connection, too, the mobile station would continue hanging in the old cell when in the area of another cell, and it would inform the network e.g. in conjunction with a change of base station or the call setup procedure that it gives preference to the old base station providing cheaper service instead of other base stations.

However, this solution has the drawback of increased co-channel interference, which is due to the fact that, when the communication connection is forcibly maintained via the base station of a cheaper cell although the mobile station is located.in the area of an adjacent cell that would provide a better connection, the mobile station has to use a higher transmission power to compensate for the signal attenuation caused by the longer distance. Therefore, the mobile telephone interferes with other mobile stations using the same frequency that are communicating at the reuse distance of this frequency. Another drawback is that changes need to be made in certain network components, such as the base station controller and the telephone itself. Changes must be made at least in the handover criterion and algorithm.

Another solution proposed to deal with the problem is to have information presented on the display of the mobile station in the idle state to indicate the cell in whose area the mobile station is currently located. The idea is to allow the subscriber to move into the area of a cell with a lower call charge at least when the subscriber is at the boundary between cells. A drawback with this solution is that, as the billing record is generated at the beginning of the call when the telephone is already in the active state, the subscriber may move on to the area of a cell with a higher call charge during the call setup procedure although the subscriber has seen from the display before the transmission of the call setup request that the mobile station is still located in the area of a cheap cell.

EP 0 568 824 relates to a charging zone service in a mobile communication network. In EP 0 568 824 the area served by a mobile communication network is divided in a number of zones. A radio network associated with the mobile communication system is equipped with marker transmitters, which transmit special charging zone identifiers. The zone transmitters are independent of the base transceiver stations in the radio network. At fixed time intervals, for example, once in every 60 seconds, a mobile terminal leaves the control channel of the base transceiver stations in order to tune to a channel used by the marker transmitters. Based on information received from the marker transmitter, the mobile terminal determines the zone in the area of which the mobile terminal is located currently. To the mobile terminal memory is stored information on zones, which have associated with them a special charging. The mobile terminal informs the user of the fact whether or not the mobile terminal is in the area of a special charging zone. Due to the fact that the checking of special charging zone is done only at fixed time intervals, the mobile terminal may move some distance out of a special charging zone before the right for special charging is cancelled. When a user places an outgoing call, the mobile terminal informs a network exchange using a signalling channel of the latest special charging zone, which was obtained at the latest tuning to marker transmitter channel. The mobile terminal may provide also a password associated with the special charging zone. Based on the special charging zone the network exchange and a billing centre apply a special charging for the call.

A disadvantage of a solution such as disclosed in EP 0 568 824 is that separate marker transmitters are required to provide the special charging zone information. There is also the disadvantage that mobile terminals must abandon the control channel of the current cell and tune to a separate marker transmitter channel, which complicates mobile radio interface design and handover processing. Additionally, the charging zone information is fixed and the same for each mobile subscriber. There is no possibility to form special charging zones, which are specific to mobile subscribers. The benefit of mobile subscriber specific special charging zones is that the special charging zone can be formed around the home cell of the mobile subscriber. In the mobile subscriber specific special charging cells there are no problems associated with the cases where the home cells for some mobile subscribers are located at the boundary of two fixed special charging zones.

EP 0 734 144 discloses a method and system for determining a charging tariff in a mobile station. In EP 0 734 144 a mobile communication network provides a mobile station with information on charging zones before calls are placed. In charging zone information is defined the E-parameters that depend on the mobile station location, the number dialled and the time. The E-parameters are defined in the GSM system of mobile communications Advice of Charge (AoC) supplementary service. When a subscriber places a call, the mobile station has in it in-formation that corresponds to the information held in the mobile communication network. Due to this information, the mobile station is able to determine call tariff independently in order to provide more accurate charging information, for example, for the advice of charge service. EP 0 734 144 does not disclose the forming of compensation charging records and the forming of billing based on combined compensation charging records and charging records formed in the network exchanges.

WO 97/11569 discloses a method for providing a cell specific supplementary service in the GSM system of mobile communications. In the method to the mobile ser-vices switching centre is stored the identifier of the cell in the area of which the allocation of a signalling channel was performed. This cell identifier is used instead of the identifier of the cell under which the traffic channel was reserved. In this way, the charging of the subscriber based on wrong cell identifier is prevented in the cases where the subscriber has been shown the status of belonging to the area of a special cell and the cell is changed during the course of call set-up. The disadvantage of the solution disclosed in WO 97/11569 is that it requires changes to the mobile switching centre software and it covers only the cases where cell change occurs in the time window between the signalling channel reservation and the traffic channel reservation. In other words, it does not cover the cases where the user interface has not reacted to the change of the cell, but the current cell has changed.

US 5,546,445 is associated with a method for selecting the cell to be used based in a mobile terminal. In the method the cell to be used is selected based on geographic position instead of using the signal strength from a number of overlapping cells. The disadvantage of the method disclosed in US 5,546,445 is that it requires the use of an external positioning system such as GPS.

The object of the present invention is to achieve a system that is free of the drawbacks of prior-art systems and that does not produce co-channel interference. In the system, determination of location of a mobile station should be implemented in a manner that allows a call started from a special cell to continue being charged at the rate applicable in that cell even if the mobile station should move on to a cell with a normal charging rate during call setup. A further object is to ensure that, even if call setup is started in a cell with a normal charging rate but a moment earlier the mobile station has been in a special cell, the call can still be charged at the rate applicable in the special cell. The length of time of the moment should also be adjustable.

Yet another object is to achieve a system in which the area of a specially priced call is not dependent on the cell coverage area but may consist of any geographic area. The area may even consist of a part of one cell and a part of another cell. Location of the mobile station should therefore be independent of the information transmitted by the base stations.

The objects stated above can be achieved with the attributes defined in the independent claims.

### SUMMARY OF THE INVENTION

The invention relates to a method for determining call charge in a cellular mobile telephone network, which comprises a mobile switching centre, which produces a call data record for each call, and a plurality of base transceiver stations, each of which transmits the calls of the mobile stations located in the area served by the respective base transceiver station and each of which transmit its own identifier data in its broadcast channel, and a plurality of subscriber mobile stations each comprising a mobile equipment and a subscriber identity module mounted in the mobile equipment and in which at least one special area has been formed and a special charging rate has been set for calls originated from such an area, and in which the mobile station determines its location at time intervals of a predetermined length.

In the method a list of the location identifiers of the special areas is stored in a subscriber identity module in advance. In the mobile station comprising the subscriber identity module and the mobile equipment, the location data of the mobile station is determined by the mobile equipment based on the identifier data transmitted in the broadcast channel, a location request message is sent by a locator object in the subscriber identification module at time intervals of predetermined length to the mobile equipment to obtain a response message comprising the location data of the mobile station, a check is carried out by the locator object to establish whether the location data of the mobile station is comprised in the special areas on the list, a location data record is stored in the memory of the mobile equipment if the locator object determines that the location data is comprised in the list, the location data record from the memory of the mobile equipment is reset if the locator object determines that the location data is not comprised in the list, a call originating from the mobile equipment is initiated, an indication of the call is received by the locator object, a compensation record associated with the call initiated is generated by the locator object if the location data record is stored at the time of the indication of the call in the subscriber identity module memory, the information placed in said compensation record comprising at least the location data and data identifying the call and the compensation record is transmitted to the mobile telephone network. In the mobile telephone network to determine the charge for the call, the data in the compensation record and the data in the call data record are combined.

The invention relates also to a cellular mobile telephone system, which comprises a mobile switching centre, a plurality of base transceiver stations, each of which keeps sending its own identifier data in its broadcast channel, mobile stations which consist of a mobile equipment (ME) and a subscriber identity module mounted in it and which order the broadcast channels received from different base transceiver stations according to signal strength and decode at least from the strongest broadcast channel the identifier data sent by the base transceiver station, and in which system at least one special area has been formed and a special charging rate has been set for calls made from such an area. In the system, the mobile equipment determines the location data of the mobile station based on the identifier data in the broadcast channel. In the system, the subscriber identity module contains a list containing data regarding the special areas, and a locator object, which sends a location request message to the mobile equipment at time intervals of predetermined length to obtain the location data of the mobile station, stores a location data record in the subscriber identity module memory if the location data is comprised in the special areas on the list, resets the location data record in the subscriber identity module memory if the location data is not comprised in the special areas on the list, receives an indication of a call originating from the mobile equipment, generates a compensation record associated with the call if the location data record is stored at the time of the indication of the call in the subscriber identity module memory and places in the compensation record at least the location data and data identifying the call and sends the compensation record to the mobile telephone network. The system further contains a billing object, which compares the compensation records with the call data records generated by the mobile switching centre and, when the call identifying data in said records correspond to each other, generates a call charge using the rate set for the special area indicated in the compensation record.

According to the basic idea of the invention, the mobile station is provided with a first object, a locator object, which determines the location of the mobile station. The location function can be carried out with an accuracy of a cell or a sub-area of a cell, making use of the existing properties of the mobile communication system. By utilising location methods external to the mobile telephone system, completely cell-independent location can be achieved. The location function is executed at certain intervals. The mobile station also contains a stored list of cells and/or areas where a special charging rate is applicable. The locator object monitors the calls originated from the mobile station. When it detects that a call is being started, it checks whether the mobile station was in a cell or area with a special charging rate at the time when the location function was executed last. If this is the case, then the object will inform the network that the call is entitled to a special rate. The last location function has even been executed before call setup is started, so a call chargeable at a special rate is possible even if the mobile station has moved some distance into the area of a cell applying a normal rate. Channel allocation is done independently of location in accordance with the normal procedures in the system, which means that co-channel interference is avoided.

One of the network elements is provided with a second object, a billing object, to which the first object sends information indicating whether the call has been started from a cell or area where a special rate is applicable. The second object receives the billing records generated by the mobile switching centre and compares the call-specific data in them with the data sent by the first object. In this way, the second object can find those calls in the billing records that are entitled to a special rate, even if the mobile station has moved during the call setup from the original cell or area into a cell where another rate, e.g. a higher rate is applicable.

Cells allowing the application of a special rate can be divided into groups of cells or areas, and each of the groups may have a different rate applicable in that group. Thus, when the final telephone bill is being compiled, the rate applicable in the special rate group can be checked and the call charge can be determined accordingly.

The locator object may send the data regarding a call entitled to a special rate to the network during the call or alternatively it may collect such data for a desired length of time and send the data at once to the billing object. However, the latter method has the drawback that it leads to a more difficult generation of the telephone bill if the data are received after the call records received during the billing period have been subjected to post-processing.

### LIST OF FIGURES

A preferred embodiment of the invention is described by referring to the attached figures, of which
Fig. 1 illustrates call setup in a mobile telephone network,
Fig. 2 illustrates the principle of the invention in a simplified form,
Fig. 3 illustrates the system in a mobile telephone network, and
Fig. 4 presents a flow and signalling diagram consistent with the procedure, applied to a known mobile telephone system.

### DETAILED DESCRIPTION OF THE INVENTION

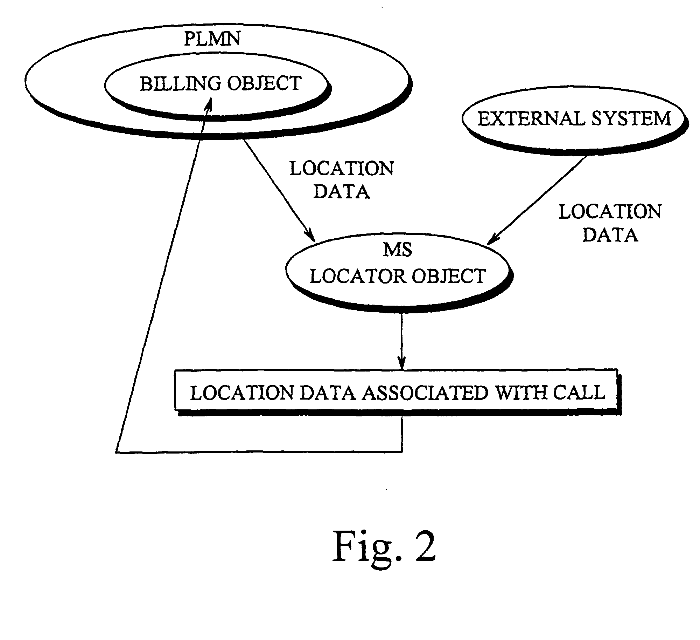

Fig. 2 illustrates the principle of the invention in a simplified form. A mobile telephone system PLMN (Public Land Mobile Network) 22 is provided with a billing object. It is placed in a network element where call data are collected in a centralised manner for billing purposes, so a natural place for it is the billing centre, to which the mobile switching centres send their call data records. Installed in the mobile station, i.e. mobile telephone MS, is a locator object 21, whose function is to establish the location of the mobile station and to send the location data to the billing object 22.

The locator object receives the information required for the determination of location in two ways: either from the mobile telephone network PLMN or from an external system.

The first-mentioned method is based on the fact that the base stations in all known mobile telephone networks transmit information about themselves in a signal that, depending on the system, can be called e.g. a beacon signal, a broadcast signal, a pilot signal, or using a corresponding designation. From this signal, the locator object can easily determine its location at least with an accuracy of one cell. In some countries, the regulations by authorities stipulate mobile station location determination with an accuracy beyond the level of the cell coverage area. To meet this requirement, several different methods have been proposed, such as methods based on a timing advance. In these, the network measures timing advance values between several base stations and the mobile station, and since the timing advance between the mobile station and each base station is directly proportional to the distance, three timing advance values will be sufficient to produce coordinates defining the location of the mobile station with a reasonable accuracy. If the PLMN network computes the location data, then these data are transmitted to the locator object.

The second method is based on the principle that the mobile station determines its location in a manner independent of the PLMN network by using some external system. Such a system could be e.g. the previously known GPS (Global Positioning System) satellite location system. In this case, the locator object would contain a GPS receiver.

In both methods, the location data is transmitted during or after the call to the billing object, which uses it as a basis for calculating the charge for the call.

Next, a description will be given of how the invention is applied in the previously known GSM system.

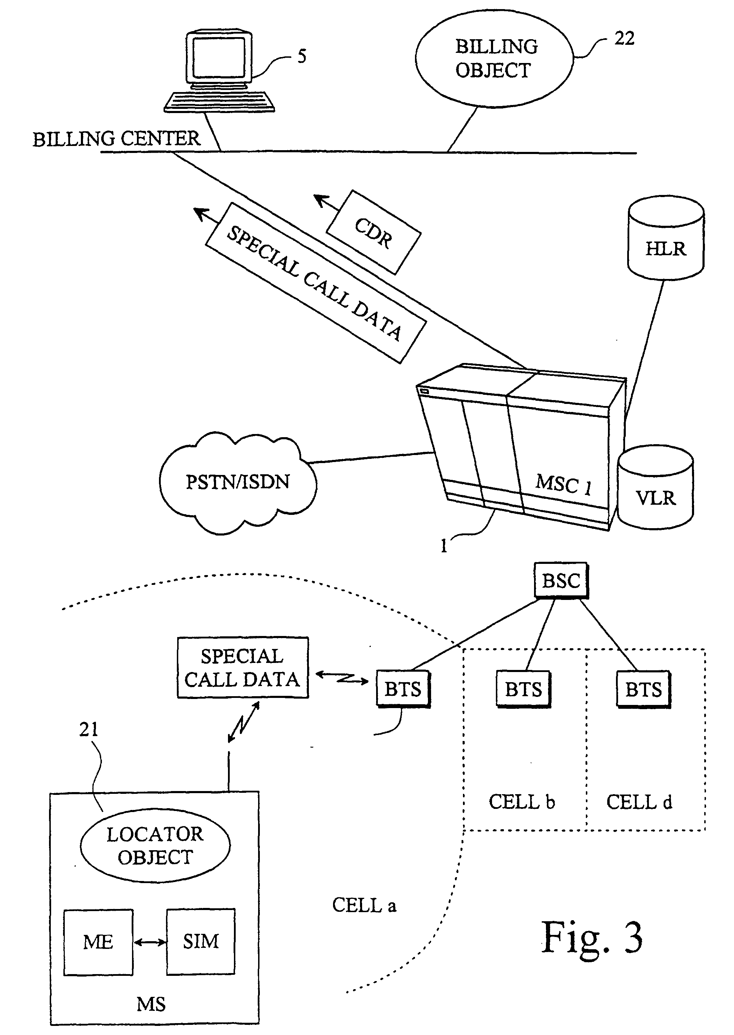

Fig. 3 presents the essential parts of the system, complemented with objects according to the invention. Many of the network elements have already been described in conjunction with Fig. 1. In the state-of-the-art system, when a mobile station MS initiates a call, the mobile switching centre MSC generates a call data record CDR, in which a desired amount of information relating to the call is stored. Usually this information comprises at least the call start time, termination time, calling and called numbers and a cell identifier Cell ID. The mobile switching centre MSC transmits a large number of CDR records at a time to the billing centre, where a billing program post-processes the call data records and generates the bills to be sent to the subscribers.

In the GSM system, as in other modern systems, the mobile station MS actually consists of two parts: mobile equipment ME and SIM card (Subscriber Identity Module), so a workable mobile station MS is only obtained by inserting a SIM card into the mobile equipment ME. The SIM card can be used as a storage medium for storing telephone numbers, but above all it is used for subscriber authentication. Identification based on the SIM card inserted by the user into the mobile station MS is designed to prevent illicit use of e.g. stolen equipment and to ensure that only subscribers who pay their bills can use the network. Stored on the card are a user identifier, i.e. PIN code (Personal Identity Number) as well as a subscriber identity code IMSI to be used in the network, the identification algorithm A3 to be used in the authentication and a subscriber-specific identification key Kᵢ.

According to the invention, the mobile station MS is provided with a new function, which in this context is designated as locator object, Fig. 3. The function of the locator object is to establish whether the mobile station is in an area where the charging rate applied to calls originated from that area are different from the rate for calls made from other areas. Usually the rate is lower. For this purpose, the locator object needs to know the location of the mobile station. In the determination of location, the broadcast information sent by the base transceiver stations is utilised. The base transceiver stations keep on sending information about themselves and their environment in their broadcast control channel. This information includes a cell identity code CI, information about adjacent cells and a location area identifier LAI. In its idle state, according to the specification, the mobile station performs frequency measurements on the BCCH (Broadcast Control Channel) channels. From a certain number of BCCH signals, e.g. six signals of highest strength, it decodes the BCCH data block, from which it obtains the BSIC data (Base Transceiver Station Colour Code). Each signal contains a cell identity code CI. The cell identity code and the carrier frequency form a pair that is individual to each base transceiver station. The one of the base transceiver stations that sends the BCCH frequency with the highest signal strength is regarded by the mobile station as its "own" base station. If the mobile station MS detects upon a change of base transceiver station BTS that the location area identifier LAI has changed, then it will send a location update request to the network.

Instead of the actual cell identity code CI, the location data used may consist of almost any unambiguous code obtained from the BSIC and updated at ½ second intervals that allows identification of the network cell or cell area. Such codes include the components of the world-wide CGI identifier (Cell Global Identification), which, according to the GSM recommendations, comprise a Mobile Country Code MCC, a Mobile Network Code MNC, a Location Area Identifier LAI and the above-mentioned Cell Identity code CI.

From the data listed above, a desired item can be selected to be used as the location data monitored by the locator object, so the area permitting calls at a special charging rate can be defined as the entire network of the operator, as a location area or as a group of one or more cells.

The locator object picks the location data decoded by the mobile equipment and stores it in memory. The picking frequency may be the same as the frequency at which the identifiers are decoded, but since the mobile station cannot advance a long way in half a second, it is preferable to use a lower picking frequency. A suitable frequency is about once in a minute. This length of time is such that the mobile station may start a call setup process in one cell, whose base station identifier it has decoded, but the call setup process is terminated in another cell, whose base station identifier is decoded and placed in the call data record to be generated.

Stored in the memory of the locator object is a list of location data for cells permitting special call charging rates. The locator object compares the decoded location data it has picked with the stored data, and if the location data is found in the storage, then the object may give a command to display the data on the display of the equipment. It may display the cell identity code as it is or it may display e.g. a text saying "special cell" or the like to indicate to the user that calls in the current location area are cheaper. If the decoded location data cannot be found in the storage, this means that calls in the location area are charged for at normal rates, so there is no need to display any information. In this case, a list of special cells has been stored in the memory of the locator object and the locator object compares the located cell identity code with the identifiers in the list, and when this comparison indicates sameness, the above-mentioned texts are displayed.

When the locator object detects that the user is entering a telephone number and that the last location check indicates that the mobile station is currently in an area where a special charging rate is applicable, it creates a record of the call data record type, which is designated here as compensation record. The compensation record contains the location data either as such or preferably as a suitable code. Moreover, it contains at least the calling and the called subscriber numbers.

The locator object transmits the compensation record in a special call data message to the billing object 22 in the network, Fig. 3. The billing object is located in the billing centre. The compensation record may be transmitted either during the call or after the call. The locator object may also collect compensation records for a longer time and send the collected compensation records periodically to the billing object. The billing object gathers the call data records sent by the mobile switching centre and the compensation records sent by the locator object and finds the ones of the call data records that are entitled to a different (lower) call charge even if the cell identity code in the call data record should indicate that the call is a normal rate call.

The locator object can be implemented as follows:

In the so-called Phase 2+ of the follow-up specification of the GSM system by ETSI (European Telecommunications Standards Institute), the functions of the SIM card have been considerably increased as compared with the original specifications. The new definitions are presented in detail in specification GSM 11.14 "Digital cellular communications system (Phase 2+): Specification of the SIM Application Tool-kit for the Subscriber Identity Module-Mobile Equipment (SIM-ME) Interface. It defines mechanisms that allow applications on the SIM card to cooperate and work with any mobile equipment ME that supports these functions. The features that can be utilised in the implementation of the invention include Proactive SIM, which provides mechanisms by means of which, upon initiative by the SIM card, the mobile equipment performs certain functions, such as sending a message of max. 160 characters from the SIM card and displaying it, sending an USSD string (Unstructured Supplementary Service Data) to the network. An important feature in respect of the invention is the Call Control by SIM function described in section 9 in the specification. When this function has been activated on the SIM card, the mobile equipment ME will perform the following functions:
- During each call attempt, the mobile equipment transfers the numbers dialled by the user as well as the associated parameters to the SIM card. The only exception is a redialled attempt, of which only certain details of call setup are transferred to the SIM card.
- The SIM gives a certain response to the mobile equipment, according to which the mobile equipment either starts call setup in accordance with the numbers dialled, does not start call setup at all or uses the data given by the SIM in the call setup procedure.
- If an extra service function is in use, the mobile equipment ME transfers a service control string to the SIM card before the service is implemented.
- The SIM gives the mobile equipment a response of the same type as in the case of dialled numbers, whereupon the mobile equipment either starts the service or does not start it or starts it in accordance with the instructions given by the SIM card.

Moreover, section 6.4.15 of Phase 2+ defines the command PROVIDE LOCAL INFORMATION, which the SIM can use to request the mobile equipment to send current location information. When the SIM issues this command to the mobile equipment, the latter responds by giving a TERMINAL RESPONSE, which contains the Mobile Country Code MCC, Mobile Network Code MNC, Location Area Identifier LAI and the Cell Identity code CI.

In addition, Phase 2+ defines the command DISPLAY TEXT. By giving this command, the SIM can cause the mobile equipment to display a desired text on the display of the equipment.

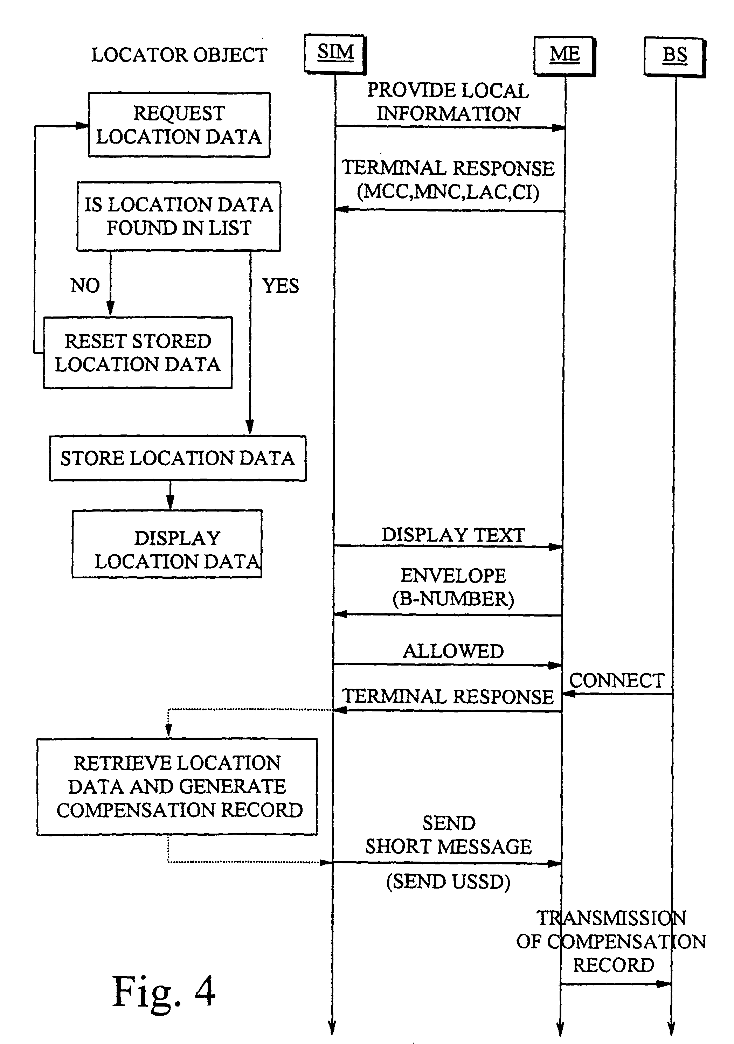

These new features of the SIM-ME interface as defined in Phase 2+ are preferably utilised in the implementation of the invention. Referring to Fig. 4, the operation of the locator object will now be described by using the concepts mentioned above. The figure illustrates the functions of the locator object and the messages exchanged between the SIM card, the mobile equipment ME and the base transceiver station BTS.

The locator object, which is a suitable program, is implemented on the SIM card. At regular time intervals ΔT, the object sends a PROVIDE LOCAL INFORMATION message to the mobile equipment ME. In response to this message, the mobile equipment sends a TERMINAL RESPONSE message, which contains the mobile country code MCC, mobile network code MOBILE NETWORK CODE MNC, location area code LAC and the cell identity code CI (Cell Id). Let us suppose that the object uses the cell identity code CI as location data. Upon receiving the message, the locator object checks whether the cell identity code is included in the list stored on the SIM card. The list has been stored on the card beforehand by the network operator. If it is not found in the list, then the cell identity data last saved is reset and, after the set time interval ΔT, the locator object sends a new request for location data and again compares the cell identity code received with the list. But if the cell identity code is found in the list, this means that the mobile equipment has received location data from the BCCH carrier while in a cell for which the operator has set a special charging rate for calls originated from that cell. In this case, the location data is stored in memory. Again, after an interval of ΔT, a request for location data is sent and the above-described procedure is repeated. If the cell identity code is not found in the list, then the previously stored cell identity code is reset.

When the location data has been stored, the locator object sends a DISPLAY TEXT message to the mobile equipment, which then displays the cell identity code comprised in the message either as it is or in plain-language form, e.g. "Reduced call charge" or the like.

When the user dials a telephone number to make a call, the mobile equipment transfers the called number dialled by the user in an ENVELOPE message to the SIM card. If the locator object accepts the number, it will send an ALLOWED acknowledgement message. After this, call setup proceeds in the normal manner and ends with a CONNECT message sent by the network, whereupon the speech path is connected. In response to the CONNECT message, the mobile equipment sends a TERMINAL RESPONSE message to the SIM card, letting the locator object know that the speech path has been connected.

The locator object now retrieves the location data from the storage. If it is not zero, which would mean "not a special rate cell", the locator object will start generating a compensation record by placing in the record the location data and call identification data specifying the call so that the billing object will be able to link the compensation record and the call data record generated by the mobile switching centre together. The call identification data may include at least a running sequence number N, which is reset when it reaches a maximum value M. The sequence number thus changes as moduloM. Each successful call would thus be given a sequence number, but since a compensation record is not generated for every call, the locator object will receive compensation records with a sequence number N that does not grow regularly. For this reason, the mobile switching centre must be provided with a function that adds to the call data record a sequence number N increasing in the same way moduloM. Thus, the billing object will be able to link the compensation records with call data records having the same N value and charge the customer on the basis of the location data given in the compensation record. Of course it is also possible to include the calling and the called numbers in the compensation record.

During the call, the locator object transfers the compensation record to the mobile equipment, which sends it over the network to the billing object during the call. The transmission can also be effected in the form of a short message SMS (Short Message Service), in which case the locator object will give the mobile equipment a Send SMS command, or using the USSD (Unstructured Supplementary Service Data) consistent with the GSM standard, in which case it will give a Send USSD command.

In the foregoing description, the compensation record was sent during the call. As another alternative, the locator object may collect compensation records for some time and send them to the billing object in a larger batch. The limit for the batch size is set by the maximum length of the short message, which is 160 characters. The transmission of the batch can be done in the same way as the transmission of a compensation record during a call. However, if the compensation records are not sent during the call but periodically in larger batches, there is a risk that the compensation records associated with the calls will be received after the actual billing period. This would be difficult because it would be necessary to send credit notes to the customers. Therefore, real-time transmission of compensation records is a preferable alternative.

In both alternatives, the billing object gathers the call data records sent by the mobile switching centre and the compensation records sent by the locator object together and finds those ones of the call data records which, according to the compensation record, are entitled to a different (lower) call charge, even if the cell identity code in the call data record should indicate that the call is a normal rate call. If the billing object cannot match a call data record produced by the mobile switching centre with a compensation record produced by the locator object, then it will assume that the call has been made in a normal rate area.

For the transmission of the compensation records to the billing object, a reliable data transmission link must be available between the objects. The SMS and USSD used in the GSM system are sufficiently reliable for this purpose.

The invention is not restricted to the example presented in the foregoing, but many different embodiments are possible within the scope of the definitions given in the claims. The locator object may also be implemented in the mobile equipment while only a list of special cells is stored on the SIM card by the operator.

Besides the cell identity code CI, the data used as location data may consist of the mobile country code MCC, the mobile network code MNC or the location area code LAC or a combination of these. In the CDMA system, the base station pilot signal data can be used as location data because each base station keeps sending its own individual pilot signal. If the mobile communication system comprises, e.g. because required by the authorities, a feature for calculating the location of the mobile station using timing advance values or some other method, then this information is transmitted e.g. in the form of coordinates to the locator object. In this case, the locator object can be provided with tables of special location areas, whose boundaries need not coincide with cell area boundaries. The tables contain e.g. coordinate values and the locator object compares the current location data with the table to establish whether the location is within a special area. It is also possible to provide the mobile station with a location system such as a GPS receiver. The locator object compares the coordinate values obtained from the system with the table values and proceeds as above.

## Claims

1. Procedure for determining call charge in a cellular mobile telephone network, which comprises
a mobile switching centre, which produces a call data record for each call,
and a plurality of base transceiver stations, each of which transmits the calls of the mobile stations located in the area served by the respective base transceiver station and each of which transmit its own identifier data in its broadcast channel,
and a plurality of subscriber mobile stations each comprising a mobile equipment and a subscriber identity module mounted in the mobile equipment
and in which at least one special area has been formed and a special charging rate has been set for calls originated from such an area, and in which the mobile station determines its location at time intervals of a predetermined length,
**characterised in that**
a list of the location identifiers of the special areas is stored in a subscriber identity module in advance,
and that in the mobile station comprising the subscriber identity module and a mobile equipment;
the location data of the mobile station is determined by the mobile equipment based on the identifier data transmitted in the broadcast channel,
a location request message is sent by a locator object (21) in the subscriber identification module at time intervals of predetermined length to the mobile equipment to obtain a response message comprising the location data of the mobile station,
a check is carried out by the locator object (21) to establish whether the location data of the mobile station is comprised in the special areas on the list,
a location data record is stored in the memory of the subscriber identity module if the locator object (21) determines that the location data is comprised in the list,
the location data record from the memory of the mobile equipment is reset if the locator object (21) determines that the location data is not comprised in the list,
a call originating from the mobile equipment is initiated,
an indication of the call is received by the locator object (21),
a compensation record associated with the call initiated is generated by the locator object (21) if the location data record is stored at the time of the indication of the call in the subscriber identity module memory, the information placed in said compensation record comprising at least the location data and data identifying the call,
the compensation record is transmitted to the mobile telephone network,
and that in the mobile telephone network;
to determine the charge for the call, the data in the compensation record and the data in the call data record are combined.

2. Procedure as defined in claim 1, **characterised in that** the data identifying the call is a parameter placed in both the compensation record and the call data record, being the same in both records.

3. Procedure as defined in claim 1, **characterised in that**, when the identifier data is stored in memory, information indicating that the mobile station is in a special area is shown on the display of the mobile station.

4. Procedure as defined in claim 1, **characterised in that** the length of the predetermined time interval is substantially longer than the interval at which the mobile station decodes the signal of the strongest broadcast channel.

5. Procedure as defined in claim 1, **characterised in that** the special area comprises at least one cell and the list of special areas contains the identifiers of the cells in the special areas.

6. Procedure as defined in claim 1, **characterised in that** the compensation record is sent during the call.

7. Procedure as defined in claim 1, **characterised in that** a plurality of compensation records are collected into a batch and the batch is sent to the mobile telephone network.

8. Procedure as defined in claim 1, **characterised in that** the call data records generated by the mobile switching centre are compared with the compensation records sent by the mobile station and when, based on the data identifying the call, records corresponding to each other are found, the price of the call is calculated on the basis of the rate set for the special area specified by the background record.

9. Cellular mobile telephone system, which comprises
a mobile switching centre,
a plurality of base transceiver stations, each of which is adapted to keep sending its own identifier data in its broadcast channel,
mobile stations which consist of a mobile equipment (ME) and a subscriber identity module mounted in it and which are adapted to order the broadcast channels received from different base transceiver stations according to signal strength and are adapted to decode at least from the strongest broadcast channel the identifier data sent by the base transceiver station,
and in which system at least one special area has been formed and a special charging rate has been set for calls made from such an area, and
**characterised in that** the mobile equipment is adapted to determine the location data of the mobile station based on the identifier data in the broadcast channel,
and that the subscriber identity module is adapted to contain a list containing data regarding the special areas, and a locator object (21) which
is adapted to send a location request message to the mobile equipment at time intervals of predetermined length to obtain the location data of the mobile station,
is adapted to store a location data record in the subscriber identity module memory if the location data is comprised in the special areas on the list,
is adapted to reset the location data record in the subscriber identity module memory if the location data is not comprised in the special areas on the list,
is adapted to receive an indication of a call originating from the mobile equipment,
is adapted to generate a compensation record associated with the call if the location data record is stored at the time of the indication of the call in the subscriber identity module memory and is adapted to place in the compensation record at least the location data and data identifying the call and is adapted to send the compensation record to the mobile telephone network,
and that the system contains a billing object (22), which is adapted to compare the compensation records with the call data records generated by the mobile switching centre and, when the call identifying data in said records correspond to each other, is adapted to generate a call charge using the rate set for the special area indicated in the compensation record.

10. System as defined in claim 9, **characterised in that** the billing object is located in conjunction with a billing centre.

11. System as defined in claim 9, **characterised in that** the subscriber identity module is a proactive subscriber identity module arranged to issue commands to the mobile equipment.

12. System as defined in claim 11, **characterised in that** the locator object is adapted to send to the mobile equipment a Provide Local Information message at time intervals of predetermined length, and in response to a Terminal Response return message the locator object is adapted to check whether the decoded identifier data is included in the list.

13. System as defined in claim 12, **characterised in that**, when the identifier data is included in the list, the locator object is adapted to send to the mobile equipment a Display Text message, in response to which the mobile equipment is adapted to display the identifier data on its display screen.

14. System as defined in claim 9, **characterised in that**, in response to a message sent to the subscriber identity module (SIM) indicating establishment of a speech connection, the locator object is adapted to generate a compensation record.

15. System as defined in claim 9, **characterised in that** the locator object is adapted to send to the mobile equipment a Send Short Message message, in response to which the mobile equipment is adapted to send the compensation record to the billing object.

16. System as defined in claim 9, **characterised in that** the locator object is adapted to send to the mobile equipment a Send USSD message, in response to which the mobile equipment is adapted to send the compensation record to the billing object.

## Patentansprüche

1. Verfahren zum Bestimmen der Gesprächsgebühr in einem zellularen Mobiltelefonnetzwerk, umfassend:
eine Mobilvermittlungsstelle, die für jedes Gespräch eine Rufdatenaufzeichnung erstellt,
mehrere Basis-Sendeempfangsstationen, von denen jede die Gespräche der in dem von der betreffenden Basis-Sendeempfangsstation bedienten Flächenbereich befindlichen Mobilstationen überträgt, und von denen jede ihre eigenen Kennungsdaten in ihrem Übertragungskanal überträgt,
mehrere Teilnehmer-Mobilstationen, die jeweils eine Mobilausrüstung und ein darin untergebrachtes Teilnehmer-Kennungsmodul besitzen, und
wobei mindestens ein Spezialflächenbereich gebildet ist und für aus diesem Bereich stammende Gespräche ein Spezial-Gebührensatz eingerichtet wurde, und die Mobilstation in Zeitintervallen vorbestimmter Länge ihren Standort bestimmt,
**dadurch gekennzeichnet, dass**
vorab in einem Teilnehmer-Kennungsmodul eine Liste von Standortkennungen der Spezial-Flächenbereiche gespeichert wird,
und dass in der das Teilnehmer-Kennungsmodul und eine Mobilausrüstung aufweisenden Mobilstation
- die Standortdaten der Mobilstation von der Mobilausrüstung anhand der in dem Übertragungskanal übertragenen Kennungsdaten bestimmt werden,
- von einem Ortungsobjekt (21) in dem Teilnehmer-Kennungsmodul in Zeitintervallen vorbestimmter Länge an die Mobilausrüstung eine Standort-Anforderungsnachricht gesendet wird, um eine Antwortnachricht zu erhalten, welche die Standortdaten der Mobilstation beinhaltet,
- von dem Ortungsobjekt (21) eine Prüfung durchgeführt wird, um festzustellen, ob sich die Standortdaten der Mobilstation in den Spezial-Flächenbereichen auf der Liste befinden,
- in dem Speicher des Teilnehmer-Kennungsmoduls ein Standortdatensatz gespeichert wird, wenn das Ortungsobjekt (21) feststellt, dass die Standortdaten in der Liste enthalten sind,
- der Standortdatensatz aus dem Speicher der Mobilausrüstung zurückgesetzt wird, wenn das Ortungsobjekt (21) feststellt, dass die Standortdaten nicht in der Liste enthalten sind,
- ein von der Mobilausrüstung abgehender Anruf eingeleitet wird,
- von dem Ortungsobjekt (21) eine Anzeige des Anrufs empfangen wird,
- von dem Ortungsobjekt (21) eine zu dem eingeleiteten Anruf gehörige Kompensationsaufzeichnung generiert wird, wenn der Standortdatensatz zur Zeit der Anzeige des Anrufs in dem Speicher des Teilnehmer-Kennungsmoduls gespeichert ist, wobei die in der Kompensationsaufzeichnung enthaltene Information mindestens die Ortungsdaten und die den Anruf kennzeichnenden Daten enthalten sind,
- die Kompensationsaufzeichnung zu dem Mobiltelefonnetzwerk übertragen wird,
und dass in dem Mobiltelefonnetzwerk zur Feststellung der Gebühr für den Anruf die Daten in der Kompensationsaufzeichnung und die Daten in der Rufdatenaufzeichnung kombiniert werden.

2. Verfahren nach Anspruch 1, **dadurch gekennzeichnet, dass** die den Anruf kennzeichnenden Daten aus einem Parameter bestehen, der sowohl in der Kompensationsaufzeichnung als auch in der Rufdatenaufzeichnung in für beide Aufzeichnungen gleicher Weise enthalten ist.

3. Verfahren nach Anspruch 1, **dadurch gekennzeichnet, dass**, wenn die Kennungsdaten im Speicher gespeichert werden, auf dem Display der Mobilstation Information dargestellt wird, welche angibt, dass die Mobilstation sich in einem speziellen Flächenbereich befindet.

4. Verfahren nach Anspruch 1, **dadurch gekennzeichnet, dass** die Länge des vorbestimmten Zeitintervalls wesentlich länger ist als das Intervall, in welchem die Mobilstation das Signal des stärksten Übertragungskanals decodiert.

5. Verfahren nach Anspruch 1, **dadurch gekennzeichnet, dass** der spezielle Flächenbereich mindestens eine Zelle umfasst und die Liste der speziellen Flächenbereiche die Kennungen der Zellen innerhalb des speziellen Flächenbereichs enthält.

6. Verfahren nach Anspruch 1, **dadurch gekennzeichnet, dass** die Kompensationsaufzeichnung während des Anrufs gesendet wird.

7. Verfahren nach Anspruch 1, **dadurch gekennzeichnet, dass** eine Mehrzahl von Kompensationsaufzeichnungen zu einer Charge gesammelt werden und die Charge an das Mobiltelefonnetzwerk gesendet wird.

8. Verfahren nach Anspruch 1, **dadurch gekennzeichnet, dass** die Rufdatenaufzeichnungen, die von der Mobilvermittlungsstelle erzeugt werden, verglichen werden mit den Kompensationsaufzeichnungen, die von der Mobilstation gesendet werden, und wenn anhand der den Anruf kennzeichnenden Daten einander entsprechende Aufzeichnungen aufgefunden werden, die Gebühr für den Anruf auf der Grundlage des Gebührensatzes berechnet wird, der für den speziellen Flächenbereich eingerichtet ist, der durch die Hintergrundaufzeichnung spezifiziert wird.

9. Zellulares Mobiltelefonsystem, umfassend:
eine Mobilvermittlungsstelle,
mehrere Basis-Sendeempfangsstationen, von denen jede dazu ausgebildet ist, ihre eigenen Kennungsdaten in ihrem Übertragungskanal zu senden,
Mobilstationen, bestehend aus einer Mobilausrüstung (ME) und einem Teilnehmer-Kennungsmodul, welches in der Ausrüstung untergebracht und dazu ausgebildet ist, die von unterschiedlichen Basis-Sendeempfangsstationen empfangenen Übertragungskanäle entsprechend der Signalstärke zu ordnen und zumindest aus dem stärksten Übertragungskanal die von der Basis-Sendeempfangsstation gesendeten Kennungsdaten zu decodieren,
wobei in dem System mindestens ein spezieller Flächenbereich gebildet ist, und für Anrufe aus diesem Flächenbereich ein spezieller Gebührensatz festgelegt wurde,
**dadurch gekennzeichnet, dass** die Mobilausrüstung die Standortdaten der Mobilstation anhand der Kennungsdaten in dem Übertragungskanal ermittelt,
und dass das Teilnehmer-Kennungsmodul eine Liste aufweist, die Daten bezüglich der speziellen Flächenbereiche beinhaltet, und ein Ortungsobjekt (21) aufweist, welches dazu ausgebildet ist,
- eine Standortanforderungsnachricht in Zeitintervallen vorbestimmter Länge an die Mobilausrüstung zu senden, um die Standortdaten der Mobilstation zu erhalten,
- einen Standortdatensatz in dem Speicher des Teilnehmer-Kennungsmoduls abzuspeichern, wenn die Standortdaten in den speziellen Flächenbereichen in der Liste enthalten sind,
- den Standortdatensatz in dem Speicher des Teilnehmer-Kennungsmoduls dann zurückzusetzen, wenn die Standortdaten nicht in den speziellen Flächenbereichen der Liste enthalten sind,
- eine Anzeige eines Anrufs zu empfangen, der aus der Mobilausrüstung stammt,
- eine zu dem Anruf gehörige Kompensationsaufzeichnung zu erzeugen, wenn der Standortdatensatz zur Zeit der Anzeige des Anrufs in dem Speicher des Teilnehmer-Kennungsmoduls gespeichert ist, und in der Kompensationsaufzeichnung zumindest die Standortdaten und die den Anruf kennzeichnenden Daten unterzubringen und die Kompensationsaufzeichnung zu dem Mobiltelefonnetzwerk zu senden,
und dass das System ein Gebührenverrechnungsobjekt (22) aufweist, welches dazu ausgebildet ist, die Kompensationsaufzeichnungen mit den von der Mobilvermittlungsstelle erzeugen Rufdatenaufzeichnungen zu vergleichen und, wenn die Rufkennungsdaten in den Datensätzen einander entsprechen, unter Verwendung des für den speziellen Flächenbereich, der in der Kompensationsaufzeichnung angegeben ist, festgesetzten Gebührensatzes eine Anruf-Gebührenbelastung zu erzeugen.

10. System nach Anspruch 9, **dadurch gekennzeichnet, dass** das Gebührenverrechnungsobjekt bei einem Gebührenverrechnungszentrum gelegen ist.

11. System nach Anspruch 9, **dadurch gekennzeichnet, dass** das Teilnehmer-Kennungsmodul ein proaktives Teilnehmer-Kennungsmodul ist, ausgebildet zum Ausgeben von Befehlen an die Mobilausrüstung.

12. System nach Anspruch 11, **dadurch gekennzeichnet, dass** das Ortungsobjekt dazu ausgebildet ist, an die Mobilausrüstung in Zeitintervallen vorbestimmter Länge die Nachricht "Bereitstellen Ortsinformation" zu senden, und das Ortungsobjekt ansprechend auf die zurückgegebene Nachricht "Teilnehmerantwort" prüft, ob die decodierten Kennungsdaten in der Liste enthalten sind.

13. System nach Anspruch 12, **dadurch gekennzeichnet, dass**, wenn die Kennungsdaten in der Liste enthalten sind, das Ortungsobjekt dazu ausgebildet ist, an die Mobilausrüstung eine Nachricht "Textanzeige" zu senden, auf die ansprechend die Mobilausrüstung dazu ausgebildet ist, die Kennungsdaten auf dem Anzeigebildschirm darzustellen.

14. System nach Anspruch 9, **dadurch gekennzeichnet, dass** das Ansprechen auf eine von dem Teilnehmerkennungsmodul (SIM) gesendete Nachricht, die das Zustandekommen einer Gesprächsverbindung angibt, das Ortungsobjekt eine Kompensationsaufzeichnung erstellt.

15. System nach Anspruch 9, **dadurch gekennzeichnet, dass** das Ortungsobjekt dazu ausgebildet ist, an die Mobilausrüstung eine Nachricht "Sende Kurznachricht" zu senden, auf die ansprechend die Mobilausrüstung dazu ausgebildet ist, die Kompensationsaufzeichnung an das Gebührenverrechnungsobjekt zu senden.

16. System nach Anspruch 9, **dadurch gekennzeichnet, dass** das Ortungsobjekt dazu ausgebildet ist, an die Mobilausrüstung eine Nachricht "Senden USSD" zu senden, auf die ansprechend die Mobilausrüstung dazu ausgebildet ist, die Kompensationsaufzeichnung an das Gebührenverrechnungsobjekt zu senden.

## Revendications

1. Procédé pour déterminer les frais de communication dans un réseau téléphonique mobile cellulaire, qui comprend
un centre de commutation mobile, qui produit un registre de données d'appel pour chaque appel,
et une pluralité de stations émettrices-réceptrices de base, chacune d'entre elles transmettant les appels des stations mobiles situées dans la zone desservie par la station émettrice-réceptrice de base respective et chacune d'entre elles transmettant ses propres données d'identification sur sa voie d'émission,
et une pluralité de stations mobiles d'abonné, chacune d'entre elles comprenant un équipement mobile et un module d'identité d'abonné monté dans l'équipement mobile,
et dans lequel au moins une zone spéciale a été formée et un niveau de tarification spécial a été établi pour les appels provenant d'une telle zone, et dans lequel la station mobile détermine son emplacement à des intervalles temporels d'une longueur prédéterminée,
**caractérisé en ce que**
une liste des identificateurs d'emplacement des zones spéciales est stockée dans un module d'identité d'abonné à l'avance,
et **en ce que** dans la station mobile comprenant le module d'identité d'abonné et un équipement mobile ;
les données d'emplacement de la station mobile sont déterminées par l'équipement mobile sur la base des données d'identification transmises sur la voie d'émission,
un message de demande d'emplacement est envoyé par un objet de localisation (21) dans le module d'identification d'abonné à des intervalles temporels d'une longueur prédéterminée à l'équipement mobile pour obtenir un message de réponse comprenant les données d'emplacement de la station mobile,
une vérification est effectuée par l'objet de localisation (21) pour établir si les données d'emplacement de la station mobile sont comprises dans les zones spéciales sur la liste,
un registre de données d'emplacement est stocké dans la mémoire du module d'identité d'abonné si l'objet de localisation (21) détermine que les données d'emplacement sont comprises dans la liste,
le registre de données d'emplacement provenant de la mémoire de l'équipement mobile est réinitialisé si l'objet de localisation (21) détermine que les données d'emplacement ne sont pas comprises dans la liste,
un appel provenant de l'équipement mobile est initié,
une indication de l'appel est reçue par l'objet de localisation (21),
un registre de compensation associé à l'appel initié est généré par l'objet de localisation (21) si le registre de données d'emplacement est stocké au moment de l'indication de l'appel dans la mémoire du module d'identité d'abonné, les informations placées dans ledit registre de compensation comprenant au moins les données d'emplacement et les données d'identification d'appel,
le registre de compensation est transmis au réseau téléphonique mobile,
et **en ce que** dans le réseau téléphonique mobile,
pour déterminer les frais pour l'appel, les données dans le registre de compensation et les données dans le registre des données d'appel sont combinées.

2. Procédé selon la revendication 1, **caractérisé en ce que** les données d'identification d'appel sont un paramètre placé à la fois dans le registre de compensation et dans le registre des données d'appel, les mêmes données étant dans les deux registres.

3. Procédé selon la revendication 1, **caractérisé en ce que**, lorsque les données d'identification sont stockées en mémoire, les informations indiquant que la station mobile est dans une zone spéciale sont affichées sur l'écran de la station mobile.

4. Procédé selon la revendication 1, **caractérisé en ce que** la longueur de l'intervalle temporel prédéterminé est sensiblement plus longue que l'intervalle auquel la station mobile décode le signal de la voie d'émission la plus forte.

5. Procédé selon la revendication 1, **caractérisé en ce que** la zone spéciale comprend au moins une cellule et la liste des zones spéciales contient les identificateurs des cellules dans les zones spéciales.

6. Procédé selon la revendication 1, **caractérisé en ce que** le registre de compensation est envoyé pendant l'appel.

7. Procédé selon la revendication 1, **caractérisé en ce qu'**une pluralité de registres de compensation sont collectés dans un lot et le lot est envoyé au réseau téléphonique mobile.

8. Procédé selon la revendication 1, **caractérisé en ce que** les registres de données d'appel générés par le centre de commutation mobile sont comparés avec les registres de compensation envoyés par la station mobile et lorsque, sur la base des données d'identification d'appel, des registres correspondant l'un à l'autre sont trouvés, le prix de l'appel est calculé sur la base du tarif établi pour la zone spéciale spécifiée par le registre d'arrière-plan.

9. Système téléphonique mobile cellulaire, qui comprend
un centre de commutation mobile,
une pluralité de stations émettrices-réceptrices de base, chacune d'entre elles étant adaptée pour continuer à envoyer ses propres données d'identification sur sa voie d'émission,
des stations mobiles qui consistent en un équipement mobile (en anglais « Mobile Equipment » - ME) et un module d'identité d'abonné monté dans celui-ci et qui sont adaptées pour classer les voies d'émission reçues des différentes stations émettrices-réceptrices de base selon la force du signal et sont adaptées pour décoder au moins à partir de la voie d'émission la plus forte les données d'identification envoyées par la station émettrice-réceptrice de base,
et dans lequel système au moins une zone spéciale a été formée et un niveau de tarification spécial a été établi pour les appels passés depuis une telle zone, et
**caractérisé en ce que** l'équipement mobile est adapté pour déterminer les données d'emplacement de la station mobile sur la base des données d'identification sur la voie d'émission,
et **en ce que** le module d'identité d'abonné est adapté pour contenir une liste contenant des données concernant les zones spéciales, et un objet de localisation (21) qui
est adapté pour envoyer un message de demande d'emplacement à l'équipement mobile à des intervalles temporels d'une longueur prédéterminée pour obtenir les données d'emplacement de la station mobile,
est adapté pour stocker un registre de données d'emplacement dans la mémoire du module d'identité d'abonné si les données d'emplacement sont comprises dans les zones spéciales de la liste,
est adapté pour réinitialiser le registre de données d'emplacement dans la mémoire du module d'identité d'abonné si les données d'emplacement ne sont pas comprises dans les zones spéciales de la liste,
est adapté pour recevoir une indication d'un appel provenant de l'équipement mobile,
est adapté pour générer un registre de compensation associé à l'appel si le registre de données d'emplacement est stocké au moment de l'indication de l'appel dans la mémoire du module d'identité d'abonné et est adapté pour placer dans le registre de compensation au moins les données d'emplacement et les données d'identification d'appel et est adapté pour envoyer le registre de compensation au réseau téléphonique mobile,
et **en ce que** dans le système comprend un objet de facturation (22), qui est adapté pour comparer les registres de compensation avec les registres des données d'appel générés par le centre de commutation mobile et, lorsque les données d'identification d'appel dans lesdits registres correspondent l'une à l'autre, est adapté pour générer des frais de communication en utilisant le tarif établi pour la zone spéciale indiquée dans le registre de compensation.

10. Système selon la revendication 9, **caractérisé en ce que** l'objet de facturation est situé en conjonction avec un centre de facturation.

11. Système selon la revendication 9, **caractérisé en ce que** le module d'identité d'abonné est un module d'identité d'abonné proactif agencé pour transmettre des commandes à l'équipement mobile.

12. Système selon la revendication 11, **caractérisé en ce que** l'objet de localisation est adapté pour envoyer à l'équipement mobile un message Fournir Informations Locales à des intervalles temporels d'une longueur prédéterminée, et en réponse à un message de retour Réponse Définitive, l'objet de localisation est adapté pour vérifier si les données d'identification décodées sont incluses dans la liste.

13. Système selon la revendication 12, **caractérisé en ce que**, lorsque les données d'identification sont incluses dans la liste, l'objet de localisation est adapté pour envoyer à l'équipement mobile un message Afficher Texte, en réponse auquel l'équipement mobile est adapté pour afficher les données d'identification sur son écran d'affichage.

14. Système selon la revendication 9, **caractérisé en ce que**, en réponse à un message envoyé au module d'identité d'abonné (en anglais « Subscriber Identity Module » - SIM) indiquant l'établissement d'une connexion vocale, l'objet de localisation est adapté pour générer un registre de compensation.

15. Système selon la revendication 9, **caractérisé en ce que** l'objet de localisation est adapté pour envoyer à l'équipement mobile un message Envoyer Message Court, en réponse auquel l'équipement mobile est adapté pour envoyer le registre de compensation à l'objet de facturation.

16. Système selon la revendication 9, **caractérisé en ce que** l'objet de localisation est adapté pour envoyer à l'équipement mobile un message Envoyer USSD, en réponse auquel l'équipement mobile est adapté pour envoyer le registre de compensation à l'objet de facturation.
